# EUROPÄISCHE PATENTSCHRIFT

(11) **EP 0 805 072 B1**
(45) Veröffentlichungstag und Bekanntmachung des Hinweises auf die Patenterteilung: **06.03.2002**
(21) Anmeldenummer: 97107182.4
(22) Anmeldetag: 30.04.1997
(51) Int. Cl.: B60R 21/26

(54) **Gasgenerator**
Gasgenerator
Générateur de gaz

(30) Priorität: 04.05.1996 DE 19618040
(43) Veröffentlichungstag der Anmeldung: 05.11.1997
(73) Patentinhaber: TRW Airbag Systems GmbH & Co. KG, 84544 Aschau am Inn (DE)
(72) Erfinder: Bauer, Hermann, 89518 Heidenheim (DE); Fürst, Franz, 85098 Grossmehring (DE)
(74) Vertreter: Kitzhofer, Thomas, Dipl.-Ing.

(56) Entgegenhaltungen:
- EP-A- 0 444 252
- EP-A- 0 546 791
- EP-A- 0 582 861
- PATENT ABSTRACTS OF JAPAN vol. 1996, no. 01, 31. Januar 1996 (1996-01-31) & JP 07 237518 A (DAICEL CHEM IND LTD), 12. September 1995 (1995-09-12)

## Beschreibung

Die Erfindung betrifft einen Gasgenerator, der Treibgas zum Aufblasen eines Gassacks in einem Airbagsystem erzeugt, mit einem Gehäuse mit Ausströmöffnungen für den Austritt des Treibgases aus dem Gehäuse in den Gassack, mit einer Filtervorrichtung vor den Ausströmöffnungen und mit einer Zündvorrichtung zum Zünden eines in der Brennkammer befindlichen Feststoff-Treibmittels, wobei das aus der Brennkammer austretende Treibgas über Strömungsräume aus dem Gehäuse herausgeleitet wird, mit einer Brennkammer, die im Innern des Gehäuses durch ein Gehäuseoberteil, ein Gehäuseunterteil sowie durch einen Innenraum eines rohrförmigen Einsatzes ausgebildet ist, der zwischen Gehäuseoberteil und Gehäuseunterteil ortsfest gehalten ist, wobei der rohrförmige Einsatz Austrittsöffnungen in einen ringförmigen Strömungsraum zwischen dem rohrförmigen Einsatz und dem Gehäuse aufweist und Mittel an der Außenumfangsfläche des rohrförmigen Einsatzes vorgesehen sind, mit denen die Filtervorrichtung zwischen dem rohrförmigen Einsatz und dem Gehäuse gehalten ist.

Ein derartiger gattungsgemäßer Gasgenerator ist beispielsweise aus der US-A-5 189 255 bekannt.

Airbagsysteme werden in Fahrzeuge eingebaut, um im Falle eines Aufprallunfalls des Fahrzeugs die kinetische Energie der Fahrzeuginsassen zu reduzieren und die Fahrzeuginsassen vor dem Aufprall auf harte Fahrzeuginnenteile, wie beispielsweise Lenkrad oder Seitenverkleidungen der Fahrzeugtüren, zu schützen. Wenn eine Sensorik des Airbagsystems einen Aufprallunfall des Fahrzeugs erkennt, wird innerhalb des Gasgenerators ein meist in Tablettenform vorliegender Treibstoff entzündet, der in dem Brennkammergehäuse unter einem hohen Druck abbrennt und so ein Treibgas erzeugt. Dieses Treibgas dient zum Füllen eines Gassackes, auf den die Fahrzeuginsassen im Falle des Aufprallunfalls des Fahrzeugs auftreffen.

Gasgeneratoren, bei denen die axiale Bauhöhe kleiner als der radiale Durchmesser des Gasgenerators ist, werden als sogenannte Rundgasgeneratoren bezeichnet.

Ein aus der DE-A-41 35 299 bekannter Gasgenerator weist ein zweiteiliges Gehäuse auf, dessen beide Teile miteinander verschraubt sind. In dem axialsymetrisch ausgebildeten Gehäuse ist eine Brennkammer vorgesehen, in der sich ein Feststoff-Treibmittel in Tablettenform befindet. Im Falle eines Fahrzeugunfalls wird über einen elektrischen Stromimpuls eine Zündeinheit nahe der Brennkammer aktiviert, welche den Treibstoff zündet. Der Treibstoff brennt unter hohem Druck ab, und das so erzeugte Treibgas entweicht über radiale Austrittsöffnungen in einem Brennkammergehäuse nach außen, durchströmt durch Strömungsbleche vorgegebene Strömungsräume, wird in einer Filtereinheit gereinigt und strömt über Austrittsöffnungen eines Verkleidungsbleches aus dem Gasgenerator in den Gassack ein.

Die Strömungsbleche bilden dabei einerseits ein Zyklon, welches eine Zwangsführung für das Treibgas in gewünschter Weise herbeiführt, so daß nicht nur eine mehrfache Strömungsumlenkung, sondern auch ein Abtrennen von kleinen Partikeln erfolgt. Andererseits dienen die Strömungsbleche auch dazu, sich gegeneinander beabstandet für eine ausreichend entspannte Gasströmung in und durch die Filtervorrichtung zu halten. Diese Strömungsbleche müssen vor dem Verschrauben des Gehäuseoberteils mit dem Gehäuseunterteil bereits in entsprechende Aufnahmen in beiden Gehäuseteilen eingebracht sein und während der Verschraubung beider Gehäuseteile lagefixiert und vor einem Verkanten geschützt werden. Die Montage des Gasgenerators erfolgt daher aufwendig von Hand, oder es sind entsprechend komplizierte Vorrichtungen für den Zusammenbau des Gasgenerators vorzusehen. Da die Strömungsräume bei dem bekannten Gasgenerator durch mindestens vier Strömungsbleche ausgebildet sind, ist auch die Anzahl der für den Gasgenerator benötigten Einzelteile entsprechend hoch. Auch die Ausbildung der speziellen Formen der Strömungsbleche erfordert eine aufwendige Herstellung.

Aus der DE 43 17 727 ist ein Gasgenerator bekannt, der ein im wesentlichen topfförmiges, zweiteiliges Gehäuse aufweist. In dem als Brennkammer ausgebildeten Innenraum des Gehäuses ist eine Zündvorrichtung zum Zünden einer pyrotechnischen Ladung vorgesehen, deren Verbrennungsgase durch Austrittsöffnungen aus der Brennkammer austreten und über Strömungsräume zu einer Filtervorrichtung geführt werden, bevor sie aus dem Gasgenerator in den Gassack einströmen. Dieser bekannte Gasgenerator umfaßt sehr viele Einzelteile und insbesondere sind die Strömungsräume und die Filtereinrichtung außerhalb des eigentlichen Brennkammergehäuses ausgebildet, was zusätzliche Befestigungsteile erfordert.

Aus der US-A-5 189 255 ist ein Rundgasgenerator mit einem rohrförmigen Einsatz bekannt, wobei dieser Einsatzaustrittsöffnungen sowie Mittel an seiner Außenumfangsfläche hat, mit denen die Filtervorrichtung zwischen dem rohrförmigen Einsatz und dem Gehäuse gehalten ist. Diese Mittel sind durch einen radial nach außen abstehenden Ringflansch mit zackenartigen Fortsätzen gebildet. Der rohrförmige Einsatz, dessen Geometrie und damit auch seine Fertigung sehr kompliziert ist, verteuert die Kosten für das Gehäuse.

Die Erfindung schafft ein Gehäuse für einen Gasgenerator, das einfach und kostengünstig hergestellt werden kann. Dies wird bei einem Einsatz der eingangs genannten Art dadurch erreicht, daß der rohrförmige Einsatz radial nach außen abgewinkelte Laschen aufweist, durch die einerseits die Austrittsöffnungen in dem rohrförmigen Einsatz gebildet werden und die andererseits als Mittel an der Außenumfangsfläche des rohrförmigen Einsatzes zum Halten für die Filtereinrichtung dienen.

Der erfindungsgemäße Gasgenerator hat damit den wesentlichen Vorteil, daß die Anzahl der Einzelkomponenten durch die vereinfachte Bauweise des Gasgenerators bei kostengünstiger Herstellung erheblich reduziert wird. Der rohrförmige Einsatz bildet sowohl die Brennkammer und die Strömungsführung für die aus der Brennkammer austretenden Treibgase als auch die Halterung für die Filtervorrichtung. Der rohrförmige Einsatz braucht mit den Gehäuseteilen selbst nicht verbunden zu werden, sondern kann leicht über entsprechende formschlüssige Verbindungen beim das Verbinden von Gehäuseober- und -unterteil im Gehäuse fixiert werden. Durch diese einfache Verbindungstechnik läßt sich die Montage des Gasgenerators noch weiter vereinfachen sowie das Gewicht des Gasgenerators reduzieren.

Durch die radial nach außen abgewinkelten Laschen des rohrförmigen Einsatzes sind die Austrittsöffnungen in dem rohrförmigen Einsatz ausgebildet. Durch axiale Einschnitte in einem Rohr lassen sich die Abschnitte zwischen benachbarten Einschnitten leicht zu beispielsweise rechtwinklig radial nach außen stehenden Laschen abwinkeln. Die axiale Tiefe der Einschnitte entspricht dabei etwa der radialen Ausdehnung des Strömungsraumes zwischen dem Gasgeneratorgehäuse und dem rohrförmigen Einsatz. Die Laschen dienen zum einen als Strömungsschikanen für die in den Strömungsraum einströmenden Treibgase, so daß der von den Treibgasen bis zum Austritt aus dem Gehäuse zurückgelegte Strömungsweg sich verlängert und die Gase besser abgekühlt und durch Ablagerungen heißer Partikel weiter gereinigt werden. Zum anderen läßt sich die Filtervorrichtung besonders einfach, insbesondere unmittelbar vor den Ausströmöffnungen des Gasgenerators, durch Auflage auf den abgewinkelten Laschen im Gehäuse anordnen.

Eine weitere Ausführungsform ist dadurch gekennzeichnet, daß die Filtervorrichtung vor den Austrittsöffnungen des Gehäuses auch als Wärmeverdämmung ausgebildet ist. Diese Wärmeverdämmung verhindert, daß die Wärme aus dem Generatorgehäuse über die Ausströmöffnungen in den Gassack hinüberströmt.

In einer weiteren bevorzugten Ausführungsform ist eine Vorfiltervorrichtung in der Brennkammer unmittelbar vor den Ausrittsöffnungen des rohrförmigen Einsatzes vorgesehen. Diese Vorfiltervorrichtung dient einerseits zur Fixierung des in der Brennkammer befindlichen Feststoff-Treibmittels, andererseits aber gleichzeitig auch als Kühl- und Filtermedium.

In einer bevorzugten Ausführungsform ist diese Vorfiltervorrichtung ringförmig ausgebildet, so daß sie sich formschlüssig an den rohrförmigen Einsatz anlegt und somit keine besondere Halterung für die Vorfiltervorrichtung in der Brennkammer vorgesehen werden muß.

Eine weitere Ausführungsform besteht darin, daß in der Brennkammer ein Füllmaterial zur Fixierung des Feststoff-Treibmittels vorgesehen ist. Dadurch kann das Feststoff-Treibmittel, das üblicherweise in Tablettenform vorliegt, allseitig, insbesondere auch dicht zusammengepackt werden, wodurch ein Rasseln der Tabletten beim Schütteln des Gasgenerators im Einsatzfall in einem bewegten Fahrzeug vermieden wird.

Weiterhin bevorzugt ist in der Brennkammer eine Frühzündvorrichtung angeordnet. Die Selbstzündungstemperatur der heutzutage verwendeten Treibstoffe liegt bei ca. 400°C, daneben wird das Gasgeneratorgehäuse heute vorwiegend aus einer Aluminiumlegierung gefertigt, deren geringe Festigkeit bei hohen Temperaturen bekannt ist. Deshalb muß zur Erfüllung einer gesetzlich vorgeschriebenen Brandprüfung für diese Art von Gasgeneratoren eine Frühzündeinrichtung in die Gasgeneratoren integriert werden, die bereits bei einer Temperatur von unter 400°C, aber über typischen Einsatztemperaturen von bis zu 100°C eine Zündung des Treibmittels veranlaßt.

In einer weiteren vorteilhaften Ausführungsform sind das Gehäuseoberteil und das Gehäuseunterteil über eine Radialnietverbindung miteinander verbunden. Diese Verbindung ist besonders leicht auszubilden und einfach automatisch herzustellen.

In einer weiteren Ausführungsform ist ein ringförmiger Befestigungsflansch am Außenumfang des Gehäuses angebracht, so daß dieses beispielsweise über eine Schraubverbindung an das Airbagmodul angeschraubt werden kann.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist dabei nicht als abschließende Aufzählung zu verstehen, sondern hat vielmehr beispielhaften Charakter für die Schilderung der Erfindung.

Die Erfindung ist in einem Ausführungsbeispiel in der Zeichnung dargestellt und wird in der nachfolgenden Beschreibung näher erläutert. Die Figuren sind nicht notwendigerweise maßstäblich zu verstehen. Es zeigen:
- Fig. 1: einen stark schematisierten, halbseitigen Längsquerschnitt eines Ausführungsbeispiels der Erfindung mit integrierter Halterung;
- Fig. 2: eine Perspektivansicht des rohrförmigen Einsatzes des erfindungsgemäßen Generators; und
- Fig. 3: eine entsprechende Ansicht des in der US-A-5 189 255 gezeigten Einsatzes.

In Figur 3, die zunächst erläutert wird, ist ein bekannter Einsatz eines Gasgenerators nach dem Stand der Technik gezeigt. Der rohrförmige Einsatz weist Austrittsöffnungen an seiner Außenumfangsfläche auf sowie einen radial nach außen vorstehenden Ringflansch mit zackenartigen Fortsätzen 117. Der Ringflansch begrenzt mit der Außenumfangsfläche 130 einen Filter 33. Auch innerhalb des Rohres ist ein Ringflansch mit radial nach innen weisenden Zinken 115, die zwischen sich Öffnungen 121 bilden, vorgesehen. Die Geometrie des rohrförmigen Einsatzes ist sehr kompliziert, so daß dieser in seiner Herstellung aufwendig ist.

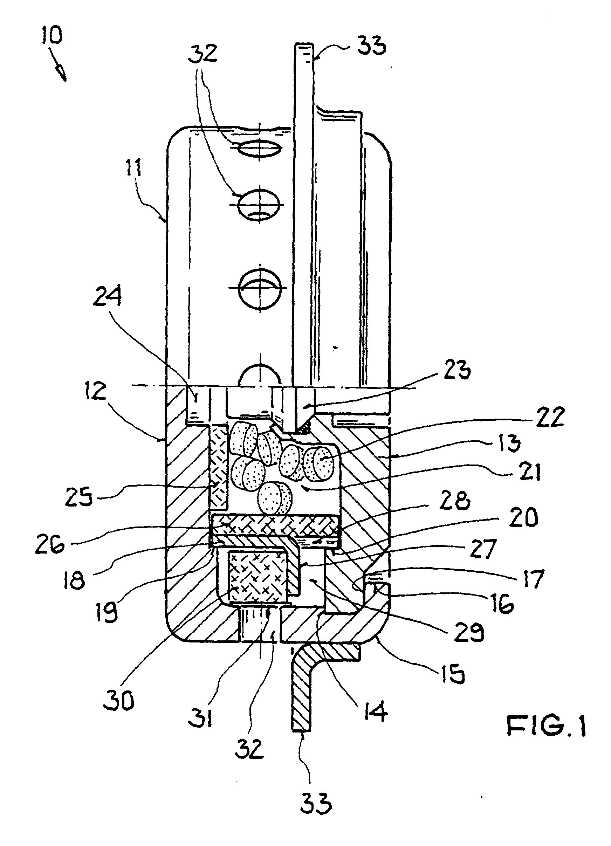

In Figur 1 ist ein erfindungsgemäßer Gasgenerator 10 dargestellt, dessen Gehäuse 11 im wesentlichen aus einem topfartigen Gehäuseoberteil 12 und einem bodenförmigen Gehäuseunterteil 13 besteht. Dieses Gehäuseunterteil 13 liegt mit seiner Innenseite an einer Anlagefläche 14 des Gehäuseoberteils 12 an und wird über eine Radialnietverbindung 15 an dem Gehäuseoberteil 12 befestigt, indem die freien axialen Enden 16 des Gehäuseoberteils 12 nach innen auf die Außenfläche 17 des Gehäuseunterteils 13 abgebogen werden.

Innerhalb des von dem Gehäuseoberteil 12 und dem Gehäuseunterteil 13 gebildeten Innenraums ist ein rohrförmiger Einsatz 18 in Anlage an Axialvorsprüngen 19, 20 des Gehäuseoberteils 12 bzw. des Gehäuseunterteils 13 lagefixiert angebracht. Der von dem rohrförmigen Einsatz 18, dem Gehäuseoberteil 12 und dem Gehäuseunterteil 13 eingeschlossene Raum bildet eine Brennkammer 21, in welcher sich ein Feststoff-Treibmittel 22 in Tablettenform befindet. In der Brennkammer 21 ist weiterhin eine Zündeinrichtung 23 am Gehäuseunterteil 13 sowie eine Frühzündeinheit 24 an dem Gehäuseoberteil 12 befestigt. Um ein Rasseln bzw. Klappern des Treibmittels 22 zu verhindern, ist außerdem in die Brennkammer 21 ein Füllmaterial 25 eingebracht, das das freie Volumen in der Brennkammer 21 ausfüllt. Ein ringförmiges erstes Filterelement 26 liegt in der Brennkammer 21 an dem rohrförmigen Einsatz 18 an.

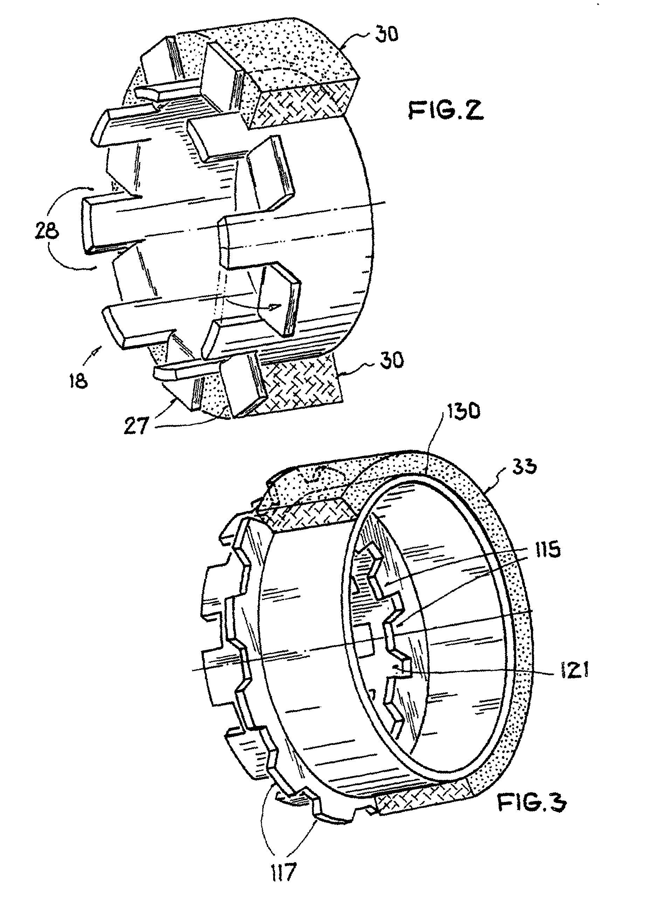

Der rohrförmige Einsatz 18 weist radial nach außen abgebogene Laschen 27 auf (vgl. Figur 2), die aus seiner Umfangsfläche abgebogen sind und daher Austrittsöffnungen 28 aus der Brennkammer 21 in einen Strömungsraum 29 ausbilden. Auf den abgebogenen Laschen 27 liegt ein ringförmiges zweites Filter- und Kühlelement 30 mit einer Verdämmung 31 auf. Diese Verdämmung 31 verhindert das Hinüberströmen der Wärme aus dem Gasgeneratorgehäuse 11 über die Ausströmöffnungen 32 in einen Gassack (nicht gezeigt). Der Strömungsraum 29 ist die über Auströmöffnungen 32 in dem Gehäuseoberteil 12 mit dem Gassack ausgebildet. An der Außenfläche des Gehäuseoberteils 12 ist weiterhin ein Befestigungsflansch 33 vorgesehen, über den der Gasgenerator 10 mit einem Airbagmodul verbindbar ist.

Wenn eine in der Figur nicht gezeigte Sensorik des Airbagsystems einen Fahrzeugunfall mit einem harten Aufprall des Fahrzeugs erkennt, wird die Zündeinheit 23 des Gasgenerators 10 aktiviert, so daß sich das Treibstoffmittel 22 innerhalb der Brennkammer 21 entzündet und abbrennen kann. Durch den Abbrand des Treibmittels 22 entsteht ein Treibgas, das durch die Vorfiltervorrichtung 26 gefiltert und durch die Austrittsöffnungen 28 des rohrförmigen Einsatzes 18 in den Strömungsraum 29 eintritt.

Das aus der Brennkammer 21 entweichende heiße Treibgas wird dabei einerseits durch die Vorfiltervorrichtung 26 und andererseits an den Wänden innerhalb des Strömungsraumes 29 abgekühlt. Durch diesen Abkühlprozeß und die verringerte Strömungsgeschwindigkeit innerhalb des Strömungsraumes 29 gehen heiße Partikel innerhalb des Treibstoffgases von einem gasförmigen in einen festen Aggregatzustand über und kondensieren an den Innenwänden des Strömungsraumes 29. Das Treibgas strömt über den ringförmigen Filter 30 und die Verdämmung 31 aus den Ausströmöffnungen 32 des Gasgenerators 10 in Richtung auf den Gassack (nicht gezeigt) aus. Durch die Verdämmung 31 wird das Treibgas vor seinem Austritt aus den Ausströmöffnungen 29 weiter abgekühlt. Die Frühzündeinheit 24 ist vorgesehen, damit bei Überschreiten einer gewissen Grenztemperatur das Treibmittel kontrolliert selbst zu zünden, ohne daß ein Fahrzeugunfall aufgetreten ist.

## Patentansprüche

1. Gasgenerator (10), der Treibgas zum Aufblasen eines Gassakkes in einem Airbagsystem erzeugt, mit einem Gehäuse (11) mit Ausströmöffnungen (32) für den Austritt des Treibgases aus dem Gehäuse (11) in den Gassack, mit einer Filtervorrichtung (30) vor den Ausströmöffnungen (32) und mit einer Zündvorrichtung (23) zum Zünden eines in der Brennkammer (21) befindlichen Feststoff-Treibmittels (22), wobei das aus der Brennkammer (21) austretende Treibgas über Strömungsräume (29) aus dem Gehäuse (11) herausgeleitet wird, mit einer Brennkammer (21), die im Innern des Gehäuses (11) durch ein Gehäuseoberteil (12), ein Gehäuseunterteil (13) sowie durch einen Innenraum eines rohrförmigen Einsatzes (18) ausgebildet ist, der zwischen Gehäuseoberteil (12) und Gehäuseunterteil (13) ortsfest gehalten ist,
wobei der rohrförmige Einsatz (18) Austrittsöffnungen (28) in einen ringförmigen Strömungsraum (29) zwischen dem rohrförmigen Einsatz (18) und dem Gehäuse (11) aufweist und Mittel an der Außenumfangsfläche des rohrförmigen Einsatzes (18) vorgesehen sind, mit denen die Filtervorrichtung (30) zwischen dem rohrförmigen Einsatz (18) und dem Gehäuse (11) gehalten ist,
**dadurch gekennzeichnet, daß** der rohrförmige Einsatz (18) radial nach außen abgewinkelte Laschen (27) aufweist, durch die einerseits die Austrittsöffnungen (28) in dem rohrförmigen Einsatz (18) gebildet werden und die andererseits als Mittel an der Außenumfangsfläche des rohrförmigen Einsatzes (18) zum Halten für die Filtereinrichtung (30) dienen.

2. Gasgenerator nach Anspruch 1, **dadurch gekennzeichnet, daß** eine Vorfiltervorrichtung (26) in der Brennkammer (21) unmittelbar vor den Austrittsöffnungen (28) in dem rohrförmigen Einsatz (18) vorgesehen ist.

3. Gasgenerator nach Anspruch 2, **dadurch gekennzeichnet, daß** die Vorfiltervorrichtung (26) ringförmig ausgebildet ist.

4. Gasgenerator nach einem der vorhergehenden Ansprüche, **dadurch gekennzeichnet, daß** in der Brennkammer (21) ein Füllmaterial (25) zur Fixierung des Feststoff-Treibmittels (22) vorgesehen ist.

5. Gasgenerator nach einem der vorhergehenden Ansprüche, **dadurch gekennzeichnet, daß** eine Frühzündvorrichtung (24) in der Brennkammer (21) angeordnet ist.

6. Gasgenerator nach einem der vorhergehenden Ansprüche, **dadurch gekennzeichnet, daß** das Gehäuseoberteil (12) und das Gehäuseunterteil (13) über eine Radialnietverbindung (15) miteinander verbunden sind.

7. Gasgenerator nach einem der vorhergehenden Ansprüche, **dadurch gekennzeichnet, daß** ein ringförmiger Befestigungsflansch (33) an dem Außenumfang des Gehäuses (11) angebracht ist.

## Claims

1. A gas generator (10) which generates propellant gas for inflating a gas bag in an air bag system, comprising a housing (11) having discharge openings (32) for the exit of the propellant gas from the housing (11) into the gas bag, a filter device (30) upstream of the discharge openings (32) and an ignition device (23) for igniting a solid propellant (22) contained in the combustion chamber (21), the propellant gas exiting from the combustion chamber (21) being directed out of the housing (11) via flow chambers (29), a combustion chamber (21) formed in the interior of the housing (11) by an upper part (12) of the housing, a lower part (13) of the housing as well as by an interior space of a tubular insert (18) which is fixedly held between the upper part (12) of the housing and the lower part (13) of the housing, the tubular insert (18) comprising outlet openings (28) into an annular flow chamber (29) between the tubular insert (18) and the housing (11), and means being provided at the outer peripheral surface of the tubular insert (18) for holding the filter device (30) between the tubular insert (18) and the housing (11),
**characterized in that**
the tubular insert (18) comprises tabs (27) bent radially outwards which, on the one hand, form the outlet openings (28) in the tubular insert (18) and, on the other hand, serve as a means at the outer peripheral surface of the tubular insert (18) for holding the filter device (30).

2. The gas generator according to claim 1, **characterized in that** a preliminary filter device (26) is provided in the combustion chamber (21) directly upstream of the outlet openings (28) in the tubular insert (18).

3. The gas generator according to claim 2, **characterized in that** the preliminary filter device (26) is configured annularly.

4. The gas generator according to any of the preceding claims, **characterized in that** a filling material (25) for fixing the solid propellant (22) in place is provided in the combustion chamber (21).

5. The gas generator according to any of the preceding claims, **characterized in that** a pre-ignition device (24) is arranged in the combustion chamber (21).

6. The gas generator according to any of the preceding claims, **characterized in that** the upper part (12) of the housing and the lower part (13) of the housing are connected to each other by means of a radial riveted joint (15).

7. The gas generator according to any of the preceding claims, **characterized in that** an annular fastening flange (33) is disposed at the outer periphery of the housing (11).

## Revendications

1. Générateur de gaz (10) qui produit du gaz de propulsion pour gonfler un coussin à gaz dans un système à airbag, comportant un boîtier (11) avec des orifices d'évacuation (32) pour la sortie du gaz de propulsion hors du boîtier (11) dans le coussin à gaz, un dispositif de filtre (30) en amont des orifices d'évacuation (32) et un dispositif d'allumage (23) pour allumer un agent de propulsion solide (22) se trouvant dans la chambre de combustion (21), le gaz de propulsion sortant de la chambre de combustion (21) étant guidé hors du boîtier (11) via des espaces d'écoulement (29), une chambre de combustion (21) qui est réalisée à l'intérieur du boîtier (11) par une partie supérieure (12) du boîtier, une partie inférieure (13) du boîtier ainsi que par un espace intérieur d'un insert (18) tubulaire qui est maintenu stationnaire entre la partie supérieure (12) du boîtier et la partie inférieure (13) du boîtier, l'insert tubulaire (18) présentant des orifices de sortie (28) dans espace d'écoulement (29) annulaire entre l'insert (18) tubulaire et le boîtier (11) et des moyens étant prévus sur la surface périphérique extérieure de l'insert (18) tubulaire, pour maintenir le dispositif de filtre (30) entre l'insert (18) tubulaire et le boîtier (11),
**caractérisé en ce que**
l'insert (18) tubulaire présente des pattes (27) coudées radialement vers l'extérieur qui, d'une part, forment les orifices de sortie (28) dans l'insert (18) tubulaire et, d'autre part, servent de moyens sur la surface périphérique extérieure de l'insert (18) tubulaire pour maintenir le dispositif de filtre (30).

2. Générateur de gaz selon la revendication 1, **caractérisé en ce qu'**un dispositif de filtre préliminaire (26) est prévu dans la chambre de combustion (21) directement en amont des orifices de sortie (28) dans l'insert (18) tubulaire.

3. Générateur de gaz selon la revendication 2, **caractérisé en ce que** le dispositif de filtre préliminaire (26) est réalisé de forme annulaire.

4. Générateur de gaz selon l'une quelconque des revendications précédentes, **caractérisé en ce que** dans la chambre de combustion (21) est prévu un matériau de remplissage (25) pour fixer l'agent de propulsion solide (22).

5. Générateur de gaz selon l'une quelconque des revendications précédentes, **caractérisé en ce qu'**un dispositif d'allumage prématuré (24) est agencé dans la chambre de combustion (21).

6. Générateur de gaz selon l'une quelconque des revendications précédentes, **caractérisé en ce que** la partie supérieure (12) du boîtier et la partie inférieure (13) du boîtier sont reliées l'une à l'autre par une liaison à rivetage radial (15).

7. Générateur de gaz selon l'une quelconque des revendications précédentes, **caractérisé en ce qu'**une bride de fixation (33) annulaire est disposée sur la périphérie extérieure du boîtier (11).
